# EUROPEAN PATENT APPLICATION

(11) **EP 3 722 635 A1**
(43) Date of publication of application: **14.10.2020**
(21) Application number: 18886928.3
(22) Date of filing: 05.12.2018
(51) Int. Cl.: F16F 15/027, F16F 15/03

(54) **VIBRATION DAMPING DEVICE**

(30) Priority: 05.12.2017 WO PCT/JP2017/043710
(71) Applicant: Kabushiki Kaisha Toshiba, Minato-ku Tokyo 105-8001 (JP); Toshiba Energy Systems & Solutions Corporation, Kawasaki-shi, Kanagawa 212-0013 (JP)
(72) Inventor: ISHII, Yuji, Tokyo 105-8001 (JP); MARUYAMA, Yutaka, Tokyo 105-8001 (JP)
(74) Representative: Moreland, David
(86) International application number: PCT/JP2018/044724
(87) International publication number: WO 2019/111950

(57) **Abstract**

A damping device to suppress or increase vibration of damping target by changing the moment of inertia of the damping target by utilizing the transformation of magnetic fluid is provided. The damping device includes a container 4 attached to a damping target 1, a magnetic fluid 5 which is included in the container 4 and which is freely transformable so as to move a center of gravity of the damping target 1, an electromagnet 6 to transform the magnetic fluid 5 by an excited magnetic field, a power supply unit 7 to supply a current to the electromagnet 6, a sensor 11 to measure displacement and speed of the damping target 1, and a controller 8 to transmit a control signal to the power supply unit 7 based on a measure value of the sensor.

## Description

### FIELD OF THE INVENTION

The present disclosure relates to a damping device.

### BACKGROUND

For improvement of riding comfort and noise prevention, damping devices for suppressing vibration of a target are known. A target which is vibrating is called a damping target. There are a passive-type and an active type, etc., for the types of damping device. Typical passive-type damping devices use, for example, springs and dampers. A damper produces resistance force proportional to speed by its viscosity, and is capable of efficiently suppressing vibration produced at the damping target.

Active-type damping devices are devices that moves a mass (an added weight) attached to the damping target in a phase opposite to the motion of the damping target. Active-type damping devices are capable of increasing the vibration of the damping target by adjusting a phase of the mass. Therefore, Active-type damping devices also work as shaking devices to increase the vibration of the target.

### CITATION LIST

JP2006-349053A

### PROBLEM TO BE SOLVED BY THE INVENTION

Since passive-type damping devices do not use electricity, they demonstrate a stable damping performance even at the time of blackout. However, dampers must be connected to surroundings, and are limited in structure. Furthermore, when the installation surface of the damping device shakes such as at the time of earthquake, the damping performance is decreased because the shaking is transferred to the damping target from the connection portion to the surroundings.

On the other hand, active-type damping devices do not need to have elements, such as dampers, that are connected to the surroundings. Therefore, there is an advantage that they are not limited in structure, and that the shaking from the surroundings is not transferred thereto. However, active-type damping devices must include an analyzer to analyze the motion of the damping target and a driver to drive a mass according to the analysis result, and the control scheme becomes complicated. Therefore, there is a problem that active-type damping devices are high in cost.

The present disclosure is suggested to address the above problems, and the objective is to provide a damping device which can suppress or increase the vibration of the damping target by changing the moment of inertia of the damping target by utilizing the transformation of magnetic fluid.

### SUMMARY OF THE INVENTION

To address the above objective, the present disclosure includes the following configurations (1) to (6) .
(1) A container attached to a damping target.
(2) A magnetic fluid which is included in the container and which is freely transformable so as to move a center of gravity of the damping target.
(3) An electromagnet to transform the magnetic fluid by an excited magnetic field.
(4) A power supply unit to supply a current to the electromagnet.
(5) A sensor to measure displacement and speed of the damping target.
(6) A controller to transmit a control signal to the power supply unit based on a measure value of the sensor.

### BRIEF DESCRIPTION OF THE DRAWINGS

Fig. 1 is a schematic diagram illustrating a configuration of a first embodiment (when the magnetic fluid is in initial state).
Fig. 2 is a schematic diagram illustrating a configuration of a first embodiment (when the magnetic fluid is in transformed state).
Fig.3 is a graph indicating a trajectory of free vibration in a speed displacement coordinate system before a transformation of the magnetic fluid.
Fig.4 is a graph indicating a trajectory of free vibration in a speed displacement coordinate system after a transformation of the magnetic fluid.
Fig. 5 is a graph indicating a switch timing of the trajectory of free vibration.
Fig. 6 is a graph when the trajectory of free vibration is switched.
Fig. 7 is a schematic diagram illustrating a configuration of a modified example according to the first embodiment.
Fig. 8 is a schematic diagram illustrating a configuration of a modified example according to the first embodiment.
Fig. 9 is a schematic diagram illustrating a configuration of a modified example according to the first embodiment.
Fig. 10 is a schematic diagram illustrating a configuration according to a second embodiment.
Fig. 11 is a schematic diagram illustrating a configuration according to a second embodiment.
Fig. 12 is a schematic diagram illustrating a configuration of a modified example according to the second embodiment.
Fig. 13 is a schematic diagram illustrating a configuration according to a third embodiment.
Fig. 14 is a schematic diagram illustrating a configuration according to a third embodiment.
Fig. 15 is a schematic diagram illustrating a configuration of a modified example according to the third embodiment.

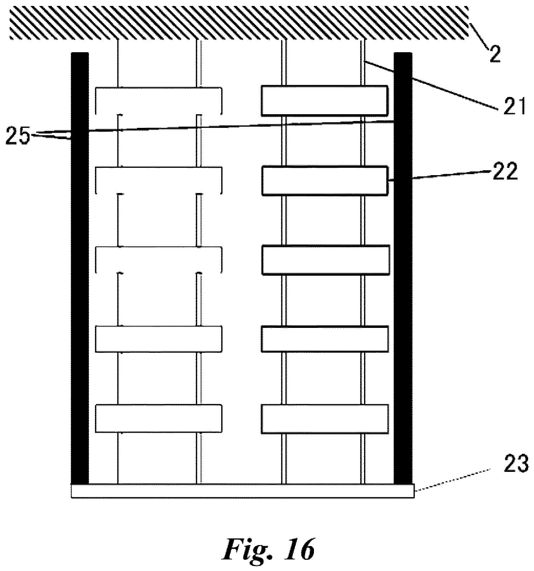

Fig. 16 is a schematic diagram illustrating a configuration of a modified example according to the third embodiment.
Fig. 17 is a schematic diagram illustrating a configuration of a modified example according to the third embodiment.
Fig. 18 is a schematic diagram of when the magnetic fluid is input in the electromagnet.
Fig. 19 is a schematic diagram of when the magnetic fluid is excited.
Fig. 20 is a schematic diagram of when the electromagnet is offset upwardly from the tub (when the magnetic fluid is in initial state).
Fig. 21 is a schematic diagram of when the magnetic fluid is excited (when the magnetic fluid is during transformation).
Fig. 22 is a schematic diagram of when the magnetic fluid is excited (when the magnetic fluid is in transformed state) .
Fig. 23 is an explanatory diagram of the simulation.
Fig. 24 is a graph indicating the simulation result (a force applied to the magnetic fluid).
Fig. 25 is a graph indicating the simulation result (aa comparison with tests).
Fig. 26 is a graph indicating the simulation result (changed condition).
Fig. 27 is a schematic diagram illustrating a configuration of a fourth embodiment (when the magnetic fluid is in initial state).
Fig. 28 is a schematic diagram illustrating a structure of a fourth embodiment (when the magnetic fluid is in transformed state).
Fig. 29 is a graph indicating an experimental result according to a fourth embodiment.
Fig. 30 is an enlarged diagram of the switch signal in the section where vibration is controlled.
Fig. 31 is a schematic diagram illustrating a configuration of a modified example according to the fourth embodiment.
Fig. 32 is a schematic diagram illustrating a configuration of a modified example according to the fourth embodiment.
Fig. 33 is a schematic diagram illustrating a configuration of a modified example according to the fourth embodiment.
Fig. 34 is a schematic diagram illustrating a configuration of a modified example according to the fourth embodiment.
Fig. 35 is a schematic diagram illustrating a configuration of a modified example according to the fourth embodiment.
Fig. 36 is a schematic diagram illustrating a configuration according to other embodiment.
Fig. 37 is a schematic diagram illustrating a configuration according to other embodiment.
Fig. 38 is a schematic diagram illustrating a configuration according to other embodiment.
Fig. 39 is a schematic diagram illustrating a configuration according to other embodiment.

### DETAILED DESCRIPTION OF THE EMBODIMENTS

An embodiment of the present disclosure is described in detail with the reference to figures. Note that same reference signs as the structures indicated in the first embodiment are used for the same structures in the second embodiment and thereafter, and the descriptions thereof are omitted.

### (First Embodiment)

### (Configuration)

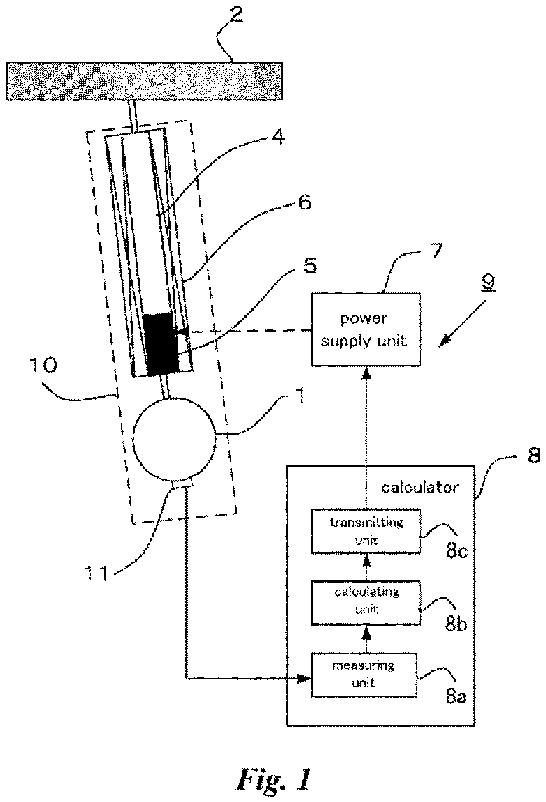

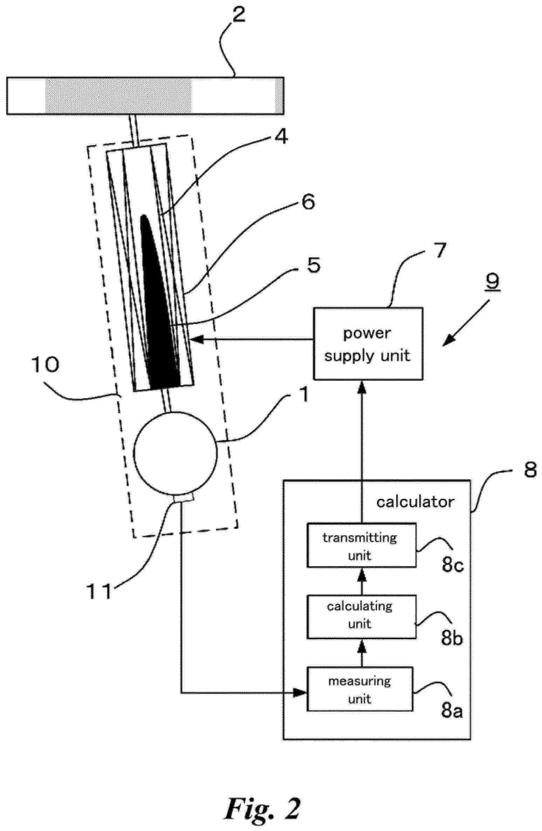

As illustrated in Figs. 1 and 2, a damping target 1 is a sphere suspended from a single fulcrum of a ceiling 2 via one pendulum structure 3 which is freely rotatably suspended. The first embodiment is a damping device 9 to suppress the vibration of damping target.

A container 4 is provided to the damping device9. The container 4 is attached to the center of the pendulum structure 3. The container 4 is formed by a hollow cylindrical member extending in the vertical direction. A magnetic fluid 5 is filled in the hollow portion in the container 4. An electromagnet 6 is wound around the side surface of the container 4. The electromagnet 6 is a member to transform the magnetic fluid 5 by the excited magnetic field.

The magnetic fluid 5 transforms in the vertical direction along the inner wall surface of the container 4 by the excited magnetic field of the electromagnet 6. As illustrated in Fig. 1, the magnetic fluid 5 before transformation is accumulated in the lower portion in the container 4 by 1/4 of the height of the container 4 from the bottom surface in the container 4. On the other hand, as illustrated in Fig. 2, the magnetic fluid 5 after transformation becomes a thin state in which top portion extends toward the ceiling 2-side by receiving the excited magnetic field from the electromagnet 6.

Due to such transformation of the magnetic fluid 5, the center of gravity of the damping target 1 changes in the vertical direction. That is, before the transformation, the center of gravity of the damping target 1 is in low position because the magnetic fluid 5 is accumulated in the lower portion of the container 4. After the transformation, the center of gravity of the damping target 1 is in high position because the magnetic fluid 5 elongated upwardly.

A power supply unit 7 to supply current to the electromagnet 6 is electrically connect4d to the electromagnet 6. When the electromagnet 6 becomes the conductive state by current applied from the power supply unit 7, the magnetic field is excited. A calculator 8 that is a controller is electrically connected to the power supply unit 7. The calculator 8 is the controller for the damping device 9. The calculator 8 includes a measuring unit 8a, a calculating unit 8b, and a transmitting unit 8c.

The transmitting unit 8c of the calculator 8 transmits an on-off signal as a control signal to the power supply unit 7. The power supply unit 7 that has received an on-signal from the calculator 8 is switched on and applies current to the electromagnet 6. The power supply unit 7 that has received an off-signal from the calculator 8 is switched off and current application to the electromagnet 6 is stopped.

The damping target 1, the pendulum structure 3, the container 4, the magnetic fluid 5, and the electromagnet 6 forms a pendulum structure forming one pendulum as a whole. Therefore, these components are referred to as a pendulum 10 (illustrated by dotted line). A sensor 11 to measure the displacement and speed of the pendulum 10 is attached to the lower portion of the damping target 1. For example, the sensor 11 may be an accelerometer or may be a displacement gauge and proximity sensor. At least one sensor 11 may be provided, and the sensor 11 measures speed and displacement by integrating and differentiating the measured signal.

The sensor 11 is connected to the calculator 8. The sensor 11 detects the displacement and speed of the pendulum 10 (strictly speaking, the damping target 1) and transmit the displacement and speed to the calculator 8. The calculator 8 includes a measuring unit 8a, a calculating unit 8b, and a transmitting unit 8c. Among them, the measuring unit 8a measures the trajectory of the pendulum 10 based on the displacement and speed of the pendulum 10 transmitted from the sensor 11.

The calculating unit 8b calculates a trajectory switching timing of the free vibration based on data measured by the measuring unit 8a. The trajectory switching timing calculated by the calculating unit 8b is a timing when the trajectory of the free vibration of the pendulum 10 intersects with x = kv (x: displacement, v: speed, k: constant) at speed displacement coordinate of free vibration. As described earlier, the transmitting unit 8c transmits the on-off signal that is the control signal to the power supply based on the calculation result of the calculating unit 8b.

### (Action)

For the damping device 9 having the above configuration to efficiently suppress or increase the vibration of the pendulum 10 including the damping target 1, it is effective to move the center of gravity of the damping target 1 in the radial direction of the pendulum 10, change the moment of inertia of the pendulum 10, and switch the trajectory of free vibration. This can be instinctively understood by taking a swing as an example and considering a moving timing of the center of gravity of the swinger of the swing.

That is, the swingers bend their knees at the lowest point where the speed is the maximum to lower the center of gravity. The swingers stretch their knees at the two ends where the displacement is the maximum to raise the center of gravity. By repeating these motions in good timing, the swing is accelerated and the amplitude is increased. In contrast, when the timing is reversed, that is, when the swinger stretches their knees at the lowest point and bends their knees at two ends, the swing is damped and the amplitude is reduced. The bending and stretching of knees moves the center of gravity and changes the moment of inertia.

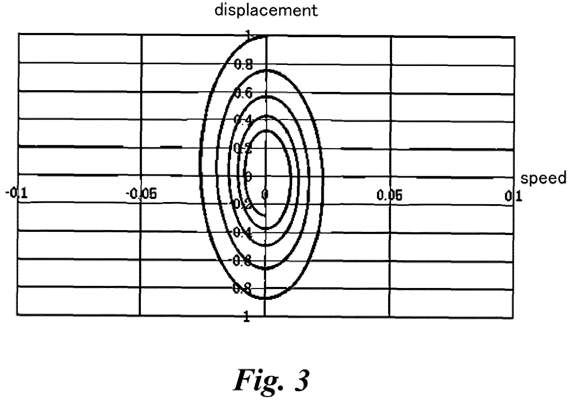

Here, trajectory switching of free vibration of the pendulum 10 will be described by using Figs. 3 to 6. In Figs . 3, 4, and 6, the free vibration of the pendulum 10 is indicated by solid line. The speed and displacement of the pendulum 10 draws an elliptical orbit and converges toward the origin in the speed displacement coordinate (x-axis: speed, y-axis: displacement).

At this time, if the displacement of free vibration becomes small in a short time, it means that vibration suppression is efficiently achieved (in the above example of the swing, it means that the swing is rapidly stopped) . In contrast, if the displacement of free vibration becomes large in a short time, it means that vibration increasing is efficiently achieved (in the above example of the swing, it means that the swing is swung more largely).

Fig. 3 is an example trajectory of free vibration of the pendulum 10 before the magnetic fluid is transformed (the power supply unit 7 is switched off and the electromagnet 6 is in non-conductive state). Since the magnetic fluid 5 before transformation is accumulated in the lower portion of the container 4, the center of gravity of the container 4 is in the lower position, and the moment of inertia of the pendulum 10 is large. Therefore, as illustrated in Fig. 3, the pendulum 10 draws a vertical elliptical orbit and converges toward the origin.

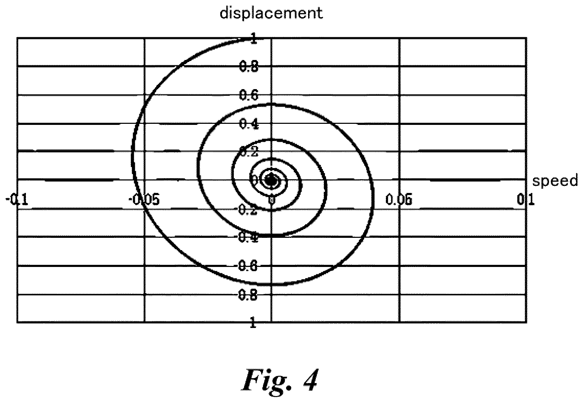

Fig. 4 is an example trajectory of free vibration of the pendulum 10 after the magnetic fluid has transformed (the power supply unit 7 is switched on and the electromagnet 6 is in conductive state) . Since the magnetic fluid 5 after transformation is upwardly thin, the center of gravity of the container 4 moves inwardly in the radial direction of the pendulum 10 (upper side in Figs. 1 and 2). Therefore, the moment of inertia becomes small.

Accordingly, as illustrated in Fig. 4, the pendulum 10 draws an elliptical orbit close to a circle (an elliptical orbit laterally longer compared with the elliptical orbit in Fig. 3), and converges toward the origin.

x = kv (x: displacement, v: speed, k: constant) illustrated by the dotted line in Fig .5 represents the switching timing of the trajectory of the free vibration of the pendulum 10 illustrated in Figs. 3 and 4. K = k1, k2, k3, k4 are arbitrary value. The switching timing of trajectory of free vibration of the pendulum 10 is calculated by the calculating unit 8b based on the measured value of the sensor 11 measured by the measuring unit 8a.

Based on the calculation result calculated by the calculating unit 8b of the calculator 8, the transmitting unit 8c of the calculator 8 transmits the on-off signal to the power supply unit 7 at a timing the trajectory of free vibration and the relational formula x = kv intersect with each other. When the power supply unit 7 receives these control signals, the power supply unit 7 switches a switch to change the conductive state of the electromagnet 6. As a result, the magnetic fluid 5 transforms so that the center of gravity of the container 4 changes, and the moment of inertia of the pendulum 10 changes.

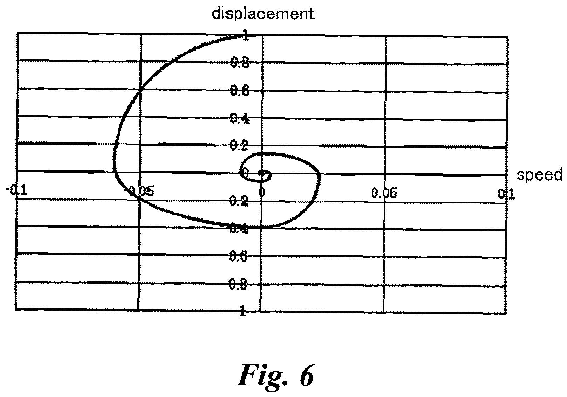

According to the above scheme, Fig 6 illustrate a case in which trajectory switching of free vibration for damping. A timing to make the moment of inertia of the pendulum 10 is when the trajectory of free vibration of the pendulum 10 intersects the relation formula X = kv. That is, the transmitting unit 8c of the calculator 8 transmits the on signal to the power supply unit 7 at a timing when the trajectory of free vibration of the pendulum 10 intersects the relational formula x = kv. When the power supply unit 7 receives the on signal, the power supply unit 7 is switched on and supplies current to the electromagnet 6. As a result, the magnetic fluid 5 transforms thinly, and the center of gravity of the container 4 moves inwardly in the radial direction (the upper side in Figs. 1 and 2). Accordingly, the moment of inertia of the pendulum 10 becomes small.

Furthermore, when the trajectory of free vibration of the pendulum 10 intersects the next x = kv, the transmitting unit 8c of the calculator 8 transmits the off signal to the power supply unit 7. When the power supply unit 7 receives the off signal, the power supply unit 7 is switched off and current application to the electromagnet 6 is stopped. When the current to the electromagnet 6 is stopped, the magnetic field will not be excited from the electromagnet 6, and thin transformation of the magnetic fluid 5 disappears. That is, the magnetic fluid 5 returns to the state before the conduction, the center of gravity of the container 4 moves outwardly in the radial direction (the lower side in Figs. 1 and 2), and the moment of inertia of the pendulum 10 becomes the same as the that of before the transformation. In this way, by turning off the conduction to the electromagnet 6 to turn the magnetic fluid 5 to the state before transformation, the center of gravity of the container 4 returns to the lower position and the moment of inertia of the pendulum 10 returns.

As it is clear from the graph of Fig. 6, by switching the trajectory of free vibration by changing the moment of inertia, the trajectory of free vibration of the pendulum 10 rapidly converges toward the origin, and the vibration is reduced in a short time. Therefore, in the first embodiment, the free vibration of the pendulum 10 is efficiently suppressed compared with Figs. 3 and 4.

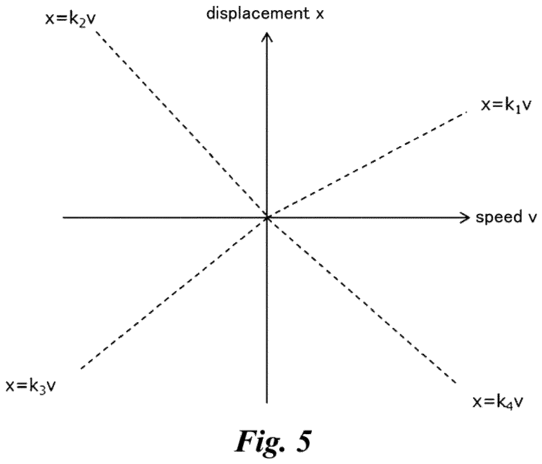

Note that by changing k1, k2, k3, and k4 in Fig. 5 to change the switching timing of the trajectory of free vibration, the free vibration of the pendulum 10 can be efficiently increased. Furthermore, the change of the moment of inertia of the pendulum 10 may not be continuous, and may be intermittent.

### (Effect)

In the first embodiment, the magnetic fluid 5 is filled in the container 4 attached to the damping target 1, and the electromagnet 6 is placed around the magnetic fluid 5. The electromagnet 6 is connected to the power supply unit 7, and the power supply unit 7 is connected to the calculator 8.

The calculator 8 calculates the switching timing of the trajectory of free vibration of the pendulum 10 based on the displacement and speed of the damping target 1 measured by the sensor 11, and transmits the control signal to the power supply unit 7. Since the power supply that has received the control signal performs conduction control to the electromagnet 6, the magnetic fluid 5 transforms depending on the presence of the magnetic field excited by the electromagnet 6, and the center of gravity of the container 4 moves. As a result, the moment of inertia of the pendulum 10 changes, and the vibration of the damping target 1 can be suppressed or increased.

In the first embodiment, the components to change the moment of inertia of the pendulum 10 are only the electromagnet 6 to transform the magnetic fluid 5 filled in the container 4, and the power supply unit 7 and the calculator 8 that are the control system thereof. Therefore, motors, etc., to drive a mass attached to the damping target 1 is unnecessary, and there is no concern for the failure of the driving unit. As a result the maintenance and adjustment of the motor can be omitted, the configuration can be simplified, and the reliability of when the suppression or increasing of vibration is performed can be improved.

Furthermore, in the first embodiment, since the driving unit such as motor is unnecessary, low maintenance cost can be anticipated. In addition, the conduction control of the electromagnet 6 may be a simple switching of on and off of the power supply unit 7. Therefore, the configuration of the calculator 8 to control the power supply unit 7 may also be simple, and no complicated control scheme is required. As a result, cost required for the power supply unit 7 and the calculator 8 is greatly reduced from the cost of the general active-type damping device, and it is extremely advantageous in economy.

### (Modified Example of First Embodiment)

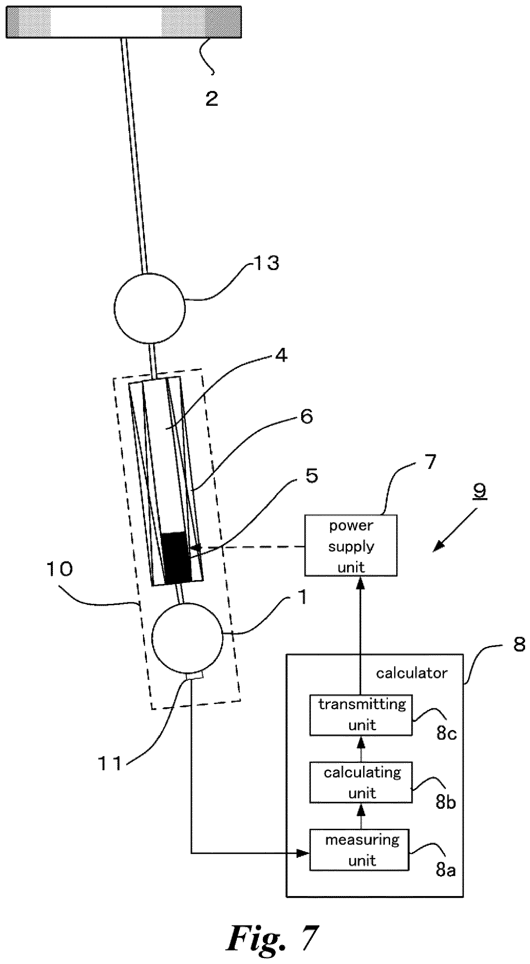

Although the pendulum structure 3 illustrated in Figs. 1 and 2 is one, the number thereof is not limited. Furthermore, the structure of the damping device 1 is not limited as long as the free vibration occurs . For example, although the above first embodiment is a single pendulum structure, embodiments illustrated in Figs. 7 to 9 utilize a double pendulum structure in which a damping device 12 is applied to two damping target 1 and 13. In these embodiments, the damping target 13 is connected to the pendulum structure 14 in addition to the configuration of the first embodiment. The other configuration is the same as the first embodiment.

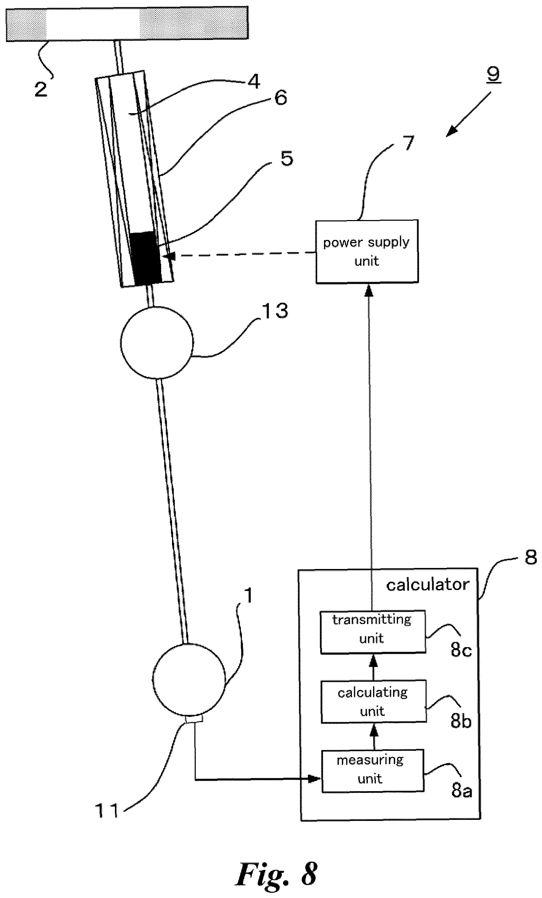

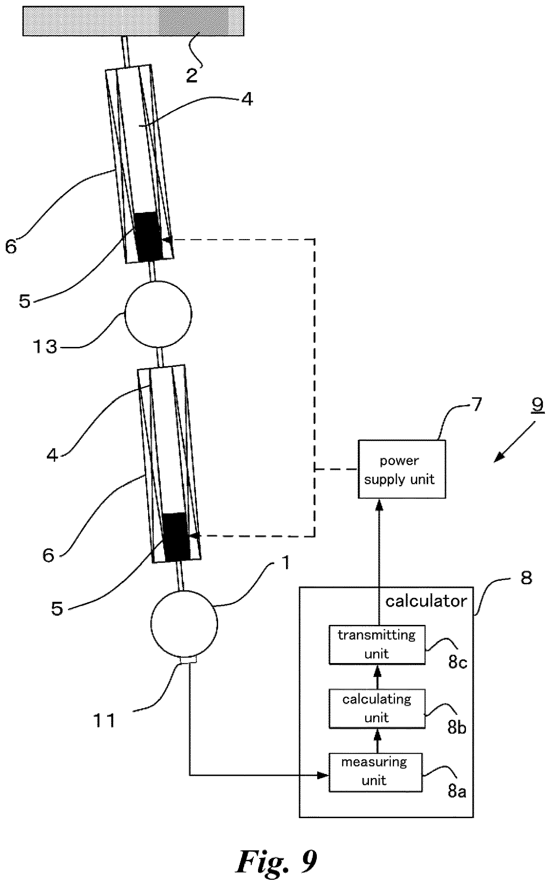

The embodiments illustrated in Figs. 7 to 9 each have different installation position for the container 4 in which the magnetic fluid 5 is filled. In the embodiment illustrated in Fig. 7, the container 4 is installed at the lower pendulum, in the embodiment illustrated in Fig. 8, the container 4 is installed at the upper pendulum, and in the embodiment illustrated in Fig.9, the containers 4 are installed at both the lower and upper pendulum.

Also in the above embodiment, the moment of inertia of the double pendulum structure can be changed by transforming the magnetic fluid 5 by arbitrary k = k1, k2, k3, k4 in the relation formula x = kv, similarly to the first embodiment. Therefore, the vibration of the damping targets 1 and 13 can be suppressed or increased.

Accordingly, similarly to the first embodiment, the damping effect and the excitation effect can be ensured while contributing to the improvement of reliability and economy. As it is clear from such embodiments, the suppression and increasing of vibration of the damping targets 1 and 13 can be efficiently achieved when the pendulum structure includes the damping target 1. That is, the embodiments that transform the magnetic fluid 5 to move the center of gravity of the damping target 1 are preferable for the damping device 9 of the damping target 1 included in the pendulum structure.

### (Second Embodiment)

### (Configuration)

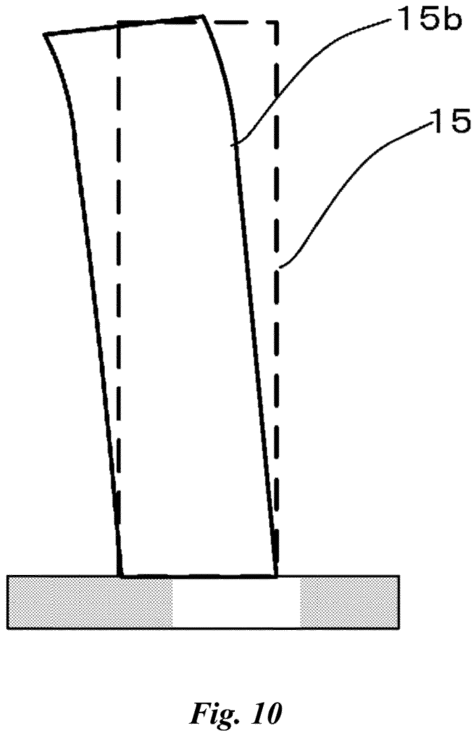

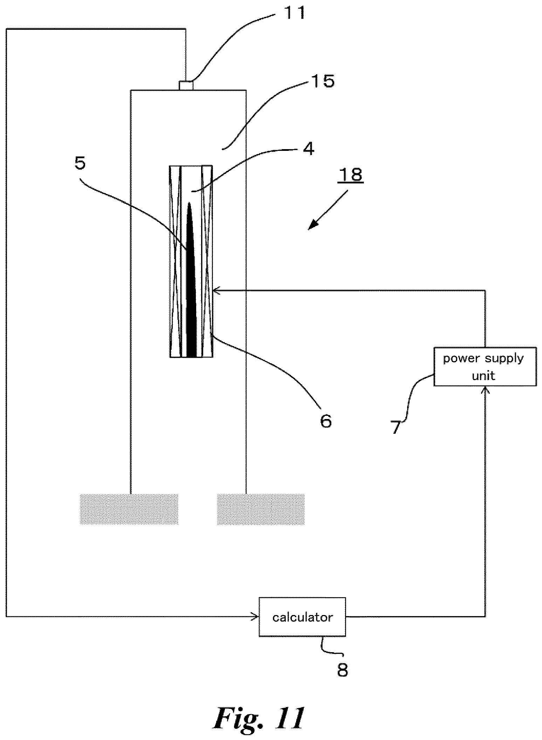

A second embodiment is described with the reference to Figs. 10 and 11. Although the above first embodiment is applied to the pendulum structure, it may be applied to a structure not having the pendulum structure. The second embodiment is a damping device applied to the general structures fixed to ground or wall. A structure 15b illustrated in Fig. 10 is a cuboid structure 15 fixed to ground or wall transformed by earthquake or outer force, etc. That is, the structure 15 is a damping target that swings in predetermined range.

As illustrated in Fig 11, in a damping target 18 according to the second embodiment, the container 4, in which the magnetic fluid 5 is filled, is attached to the center inside the structure 15. The magnetic fluid 5 is configured to change the moment of inertia of the structure 15 by transforming by the excited magnetic field from the electromagnet 6. The sensor 11 is attached to the center of the upper surface of the structure 15. The sensor 11 detects the swinging of the structure 15 and transmits it to the calculator 8.

The calculator 8 calculates the switching timing of the trajectory of swinging motion of the structure 15 based on the data related to the swinging of the structure 15 transmitted from the sensor 11, and transmits the on-off signal as the control signal to the power supply unit 7. The switching timing of the trajectory of the structure 15 obtained by the calculator 8 is a timing when the trajectory of swinging motion of the structure 15 intersects with x = kv (x: displacement, v: speed, k: constant) at speed displacement coordinate of said motion. The other configuration is the same as the above first embodiment.

### (Action and Effect)

Also in the second embodiment, the moment of inertia of the structure 15 can be changed by transforming the magnetic fluid 5 by the above relation formula k = k1, k2, k3, k4 to suppress or increase the vibration of the structure 15, as the above first embodiment. Therefore, similarly to the first embodiment, the damping effect and the excitation effect can be ensured while contributing to the improvement of reliability and economy.

### (Modified Example of Second Embodiment)

Note that in Fig. 11, the container 4 is installed at the center of the structure 15, however, the container 4 may be installed in any position in the structure 15 as long as the moment of inertia of the structure 15 can be changed by the transformation of the magnetic fluid 5 to obtain the damping effect and the excitation effect of vibration of the structure 15. Therefore, the installation position and number of the container in the structure 15 are not limited.

Although the second embodiment illustrated in Fig. 11 is applied to the structure 15 fixed to ground or wall, the second embodiment may be applied to a floating structure 16 floating on sea surface. An example for the floating structure 16 floating on the sea surface 17 is an offshore windmill which an attitude control at the time of strong wind is important.

In the above embodiments, by transforming the magnetic fluid 5 by arbitrary k = k1, k2, k3, k4, the moment of inertia of the floating structure 16 can be changed to suppress or increase the vibration thereof, similarly to the second embodiment. According to such embodiments, the connection structure can be simplified. Note that a structure may be present in any condition as long as it has mass and can rotate and swing, and for example, a general structure is a floating structure that floats in the air.

### (Third Embodiment)

### (Configuration)

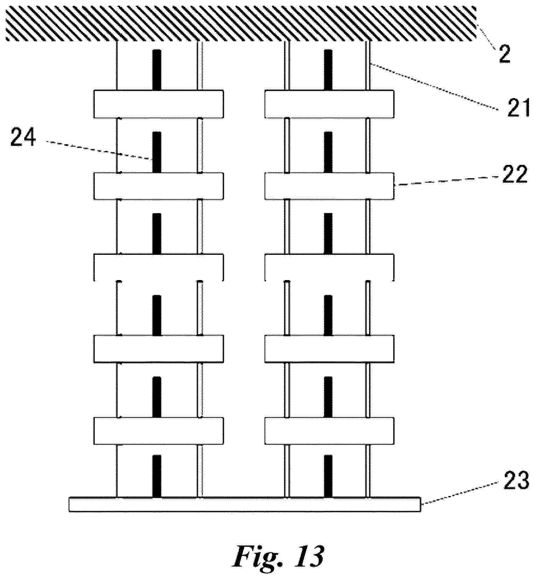

Fig. 13 is a schematic diagram of a suspended-type HVDC (High Voltage Direct Current Transmission) apparatus. In the suspended-type HVDC transmission apparatus, a plurality of thyristor modules 22 is suspended from the ceiling 2 via a suspension structure 21, and a shield 23 is provided at the bottom. A connection portion between the suspension structure 21, and the thyristor modules 22, the shield 23, and the ceiling 2 is configured to be freely rotatable, and the thyristor modules 22 and the shield 23 are provided to be freely rotatable.

As illustrated in Fig. 13, the damping device according to the third embodiment is attached to the center of the upper surface of each thyristor 22 of the suspended-type HVDC transmission apparatus, and to the shield 23 of the suspended-type HVDC transmission apparatus. That is, the thyristor modules 22 and the shield 23 are the damping target. The structure of the damping device 24 is basically the same as the first embodiment, and in Fig. 13, a portion standing on the thyristor modules 22 and the shield 23 corresponds to the container 4 illustrated in Fig. 1, etc.

The damping device 24 according to the third embodiment is configured to change the moment of inertia of the thyristor modules 22 and the shield 23 by transforming the magnetic fluid 5 by the magnetic field excited from the electromagnet 6. The calculator 8 calculates the switching timing of the trajectory of pendulum motion of the thyristor modules 22 and the shield 23 based on the data related to the vibration of the thyristor modules 22 and the shield 23 transmitted from the sensor 11, and transmits the on-off signal as the control signal to the power supply unit 7.

The switching timing of the trajectory of the thyristor modules 22 and the shield 23 obtained by the calculator 8 is a timing when the trajectory of pendulum motion of the thyristor modules 22 and the shield 23 intersects with x = kv (x: displacement, v: speed, k: constant) at speed displacement coordinate of said motion. The other configuration is the same as the above first embodiment.

Note that although a circuit to the calculator 8 from the sensor 11 is configured in the above first embodiment, if the vibration of each of the thyristor modules 22 and the shield 23 in the suspended-type HVDC apparatus is considered to be the same level at anywhere in the apparatus, the sensor 11 may not be installed to all damping device 24, and the sensor 21 may be omitted from the damping device 24 depending on the application thereof.

### (Action and Effect)

Also in the third embodiment, the moment of inertia of the thyristor modules 22 and the shield 23 can be changed by transforming the magnetic fluid 5 by the above relation formula k = k1, k2, k3, k4 to suppress or increase the vibration of each of the thyristor modules 22 and the shield 23, as the above first and second embodiments. Therefore, similarly to the first and second embodiments, the rotation of each of the thyristor modules 22 and the shield 23 that are the damping target can be suppressed while contributing to the improvement of reliability and economy.

### (Modified Example of Third Embodiment)

Although the configuration in Fig. 13 has five stages of thyristor modules 22 and two thyristor modules 22 are attached to each stage, the effect of the third embodiment appears as long as the above described structure is applied. Therefore, the number of the thyristor modules 22 is not limited I the thyristor modules 22 and the shield 23 in view of damping.

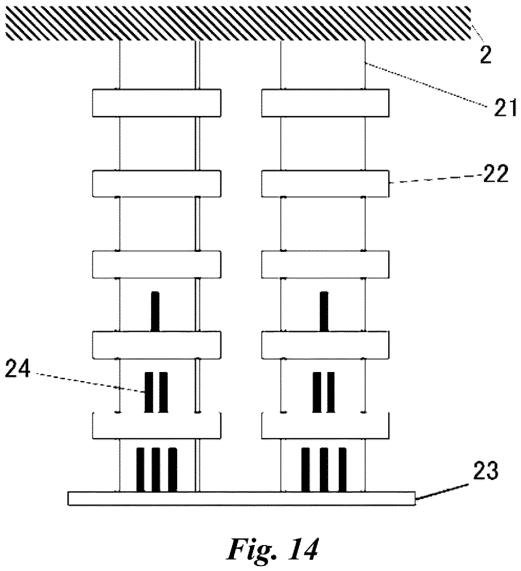

That is, although one damping device 24 is provided to each of the thyristor modules 22, the number of the damping device 24 is not limited as long as the sufficient effect appears. For example, as illustrated in Fig. 14, a plurality of the damping devices 24 may be provided to the lower thyristor modules 22 and the shield 23. At this time, the damping device 24 may not be provided to the upper thyristor modules 22. The earth of the damping device 24 is connected to the thyristor modules 22 to which the damping device 24 is provided.

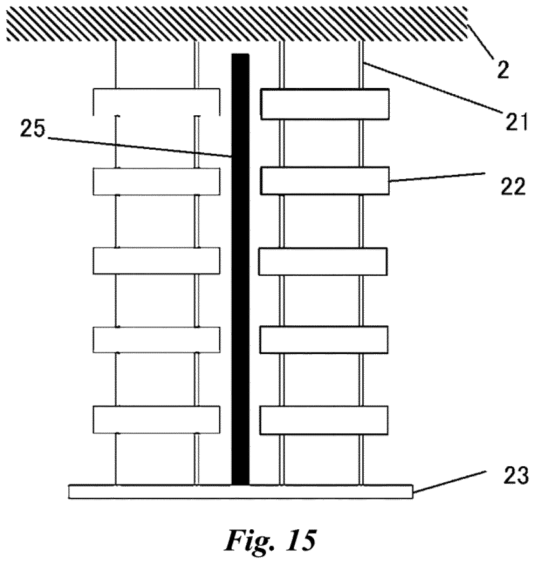

In the embodiment illustrated in Fig. 15, the damping device 24 is not provided to the thyristor modules 22 in each stages, and one large damping device across the plurality of stages is attached to the shield 23. The advantage to attach the large damping device is so that large vibration reduction effect can be obtained. Therefore, the amplitude of the shield 23 will be at allowable range even if large earthquake is occurs.

Note that in Fig. 15, one damping device 15 is attached to the canter of the shield 23, the number and installation position thereof is optional. For example, one damping device to each right and left shield 23, that is, total of two damping devices 25 may be provided as illustrated in Fig, 16.

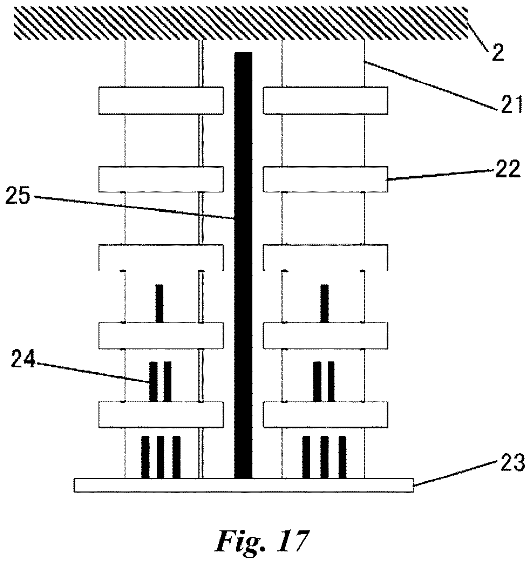

Furthermore, the embodiment illustrated in Fig. 14 and the embodiment illustrated in Fig. 1 may be combined to have the configuration of Fig. 17. In the embodiment of Fig. 17, the plurality of the damping devices 24 is provided to the lower thyristor modules 22 and the shield 23 while attaching the large damping device 25 to the shield 23. Note that the damping device 24 is not provided to the upper thyristor module 22.

As it is clear from the above multiple embodiments, when the suspended structure includes the damping target, suppression and increasing of the vibration of the damping target can be efficiently achieved regardless of the arrangement configuration of the thyristor modules 22 and the shield 23 that are the damping target. That is, the present embodiment is especially preferable for the damping devices 24 and 25 to the suspended-type HVDC apparatus.

### (Fourth Embodiment)

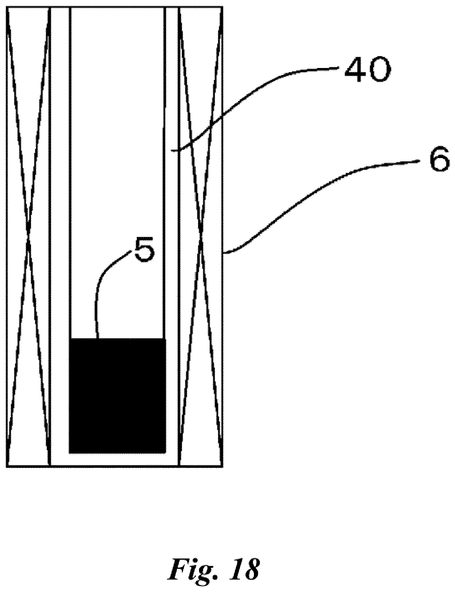

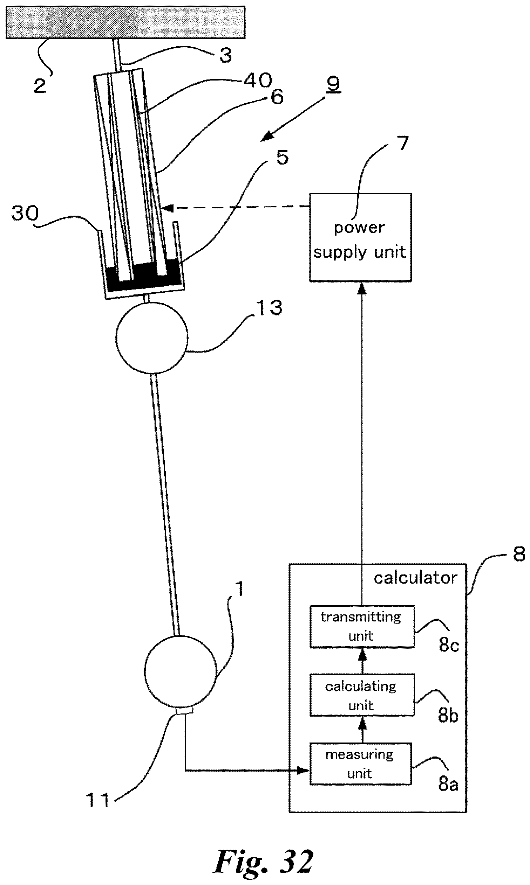

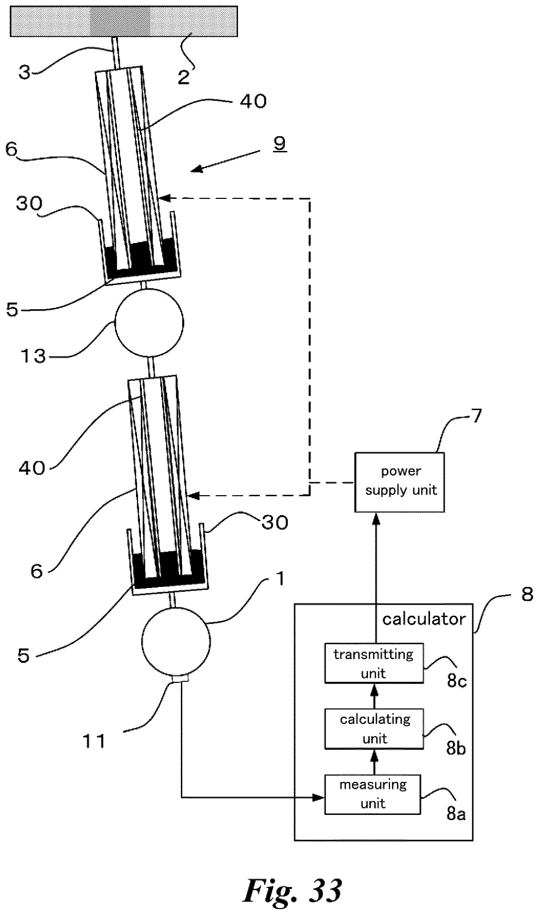

A fourth embodiment and modified examples thereof will be described using Figs. 18 to 34. Although the magnetic fluid 5 transforms to be thin as it goes upward in the above embodiment, the magnetic fluid may transform upwardly inside of the inner wall 40 of the container 4 while keeping the cylindrical shape. Such embodiments will be described below. Firstly, the transformation of the magnetic fluid 5 will be described.

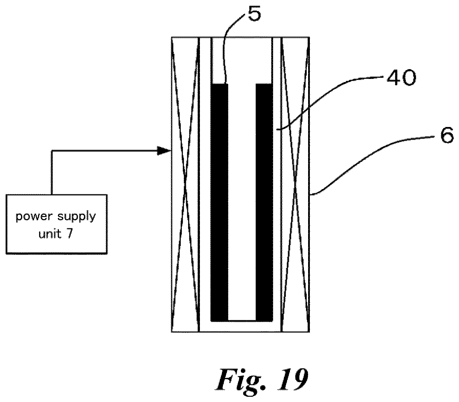

In the device illustrated in Fig. 18, the magnetic fluid 5 is filled inside the inner wall 40 wound around the electromagnet 6. The inner wall 40 may not be present if the magnetic fluid 5 does not go outside the electromagnet 6. Furthermore, a top board of the inner wall 40 may be present or may not be present. Fig. 19 is the device illustrated in Fig. 18 in which the power supply unit 7 is electrically connected to the electromagnet 6. By applying the direct current of equal to or more than the certain value by the power supply unit 7, the magnetic fluid 5 transforms along the inner surface of the inner wall as illustrated in Fig. 19.

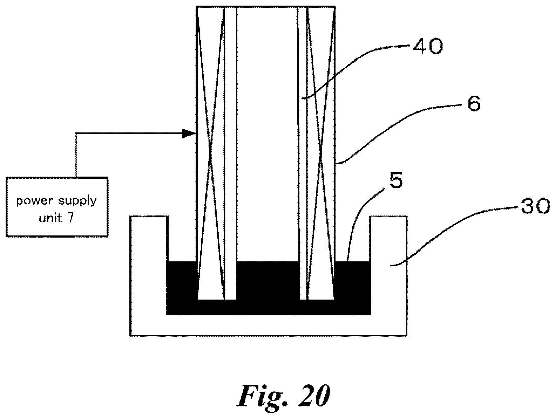

Fig. 20 is the device illustrated in Fig. 19 which is offset upwardly from a tub 30 and installed. The offset scheme of the tub 30 is not limited. The tub 30 is an equipment to accumulate the magnetic fluid 5 and has the inner diameter larger than the outer diameter of the container to which the electromagnet 6 is wound around. The shape of the tub 30 is not limited as long as the magnetic fluid does not leak. In the device illustrated in Fig. 20, the bottom and top board of the inner wall must not be present.

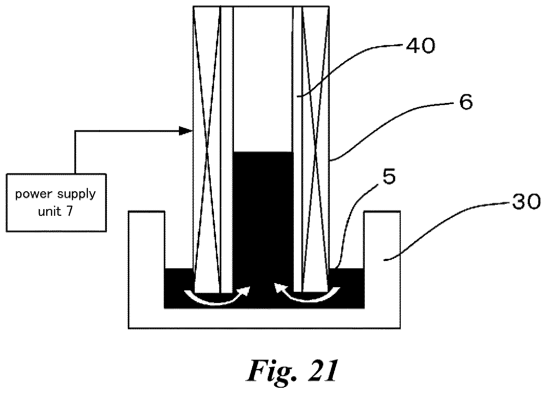

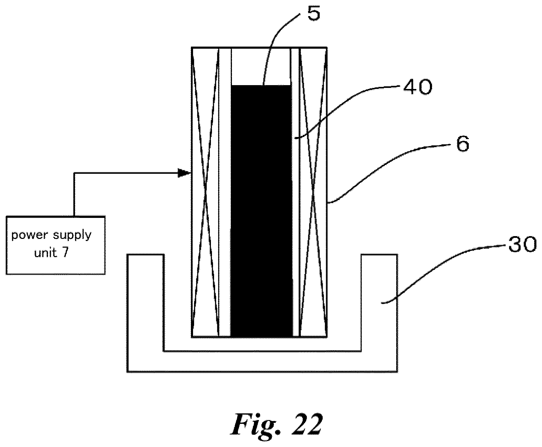

Fig. 21 illustrates the transformation of the magnetic fluid 5 when the direct current of equal to or more than the certain value is applied by the power supply unit 7. Although the magnetic fluid 5 is transformed along the inner surface of the inner wall 40 in the above device illustrated in Fig. 19, the magnetic fluid 5 transforms in the cylindrical shape as if it is filled inside the space surrounded by the inner wall 40 in the device illustrated in Figs. 21 and 22 different from Fig. 19.

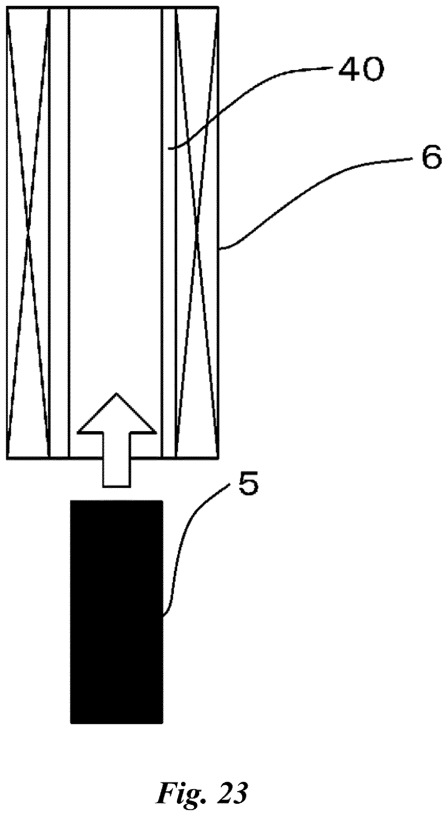

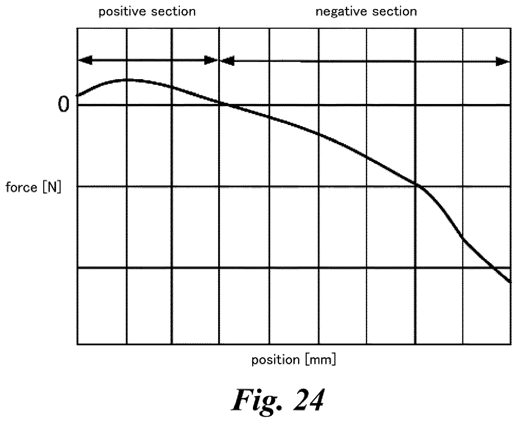

As illustrated in Fig. 23, it is assumed that the magnetic fluid 5 passes inside the excited electromagnet 6. A simulation of the sum of electromagnetic force and gravity applied to the magnetic fluid 5 at this time is illustrated in Fig. 24. In Fig. 24, horizontal axis is a position of the magnetic fluid 5 inside the electromagnet 6. Force applied to the magnetic fluid 5 is positive because the effect of electromagnetic force is strong at the lower side of the electromagnet 6, and turns into negative as the position gets higher and the effect of gravity becomes larger.

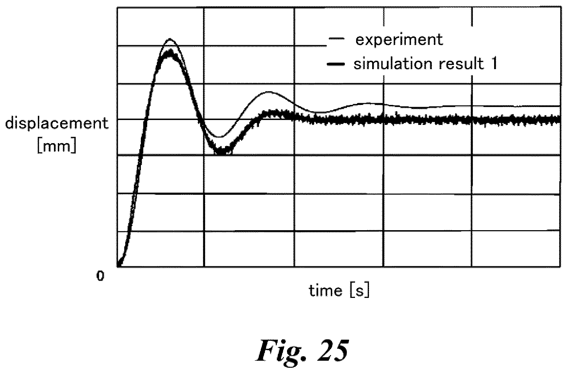

By predicting the force applied to the magnetic fluid 5 as described above, the position of the magnetic fluid 5 inside the electromagnet 6 can be estimated. Fig. 25 is a graph comparing the experimental result and simulation result of the device illustrated in Fig. 20. As indicated from this graph, the experimental result and the simulation result are well consistent, meaning that the behavior of the magnetic fluid 5 is precisely predicted.

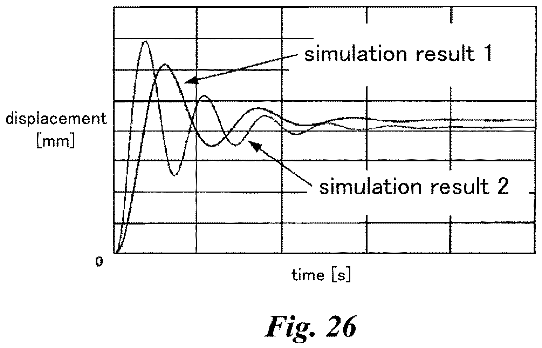

Fig. 26 is a graph in which the behavior of the magnetic fluid 5 when the current applied to the electromagnet 6 is adjusted to change the distribution of the excited magnetic field is added as the simulation result 2. In the simulation result 2, it can be found that the speed of rising is faster than the simulation result 1 and the time to reach the target value has become faster. Accordingly, an apparatus to obtain the target transformation amount and transformation speed in the damping device illustrated in Figs. 20 to 22 can be designed.

### (Configuration)

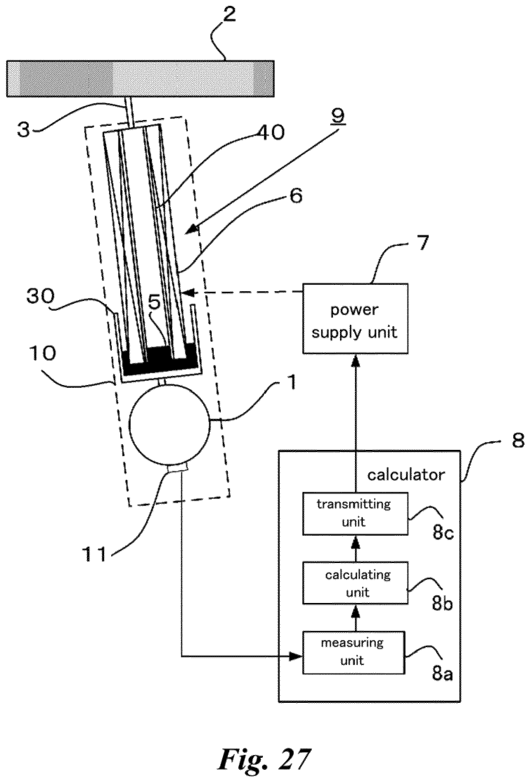

The configuration of the fourth embodiment will be described with the reference to Figs. 27 to 31. In the fourth embodiment, the device illustrated in Figs. 20 to 22 is applied as the damping device. The fourth embodiment is a damping device 9 to suppress the vibration of the damping target 1 which is a sphere suspended via one pendulum structure 3 freely rotatably suspended from single fulcrum of the ceiling 2.

The tub 30 is provided in the fourth embodiment. The basic configuration of the fourth embodiment is the same as the configuration of the first embodiment except for the tub 30. Therefore, the same members have the same reference signs, and the description thereof is omitted. The damping target 1, the pendulum structure 3, the magnetic fluid 5, the electromagnet 6, and the tub 30 forms a pendulum structure forming one pendulum as a whole. The tub 30 has the inner diameter larger than the outer diameter of the electromagnet 6. In the fourth embodiment, the portion where the damping target 1 including the tube 30 (in the first embodiment, the container 4) is the damping device 9.

### (Action)

Also in the damping device of the fourth embodiment, as described before, when taking a swing as an example and considering a moving timing of the center of gravity of the swinger of the swing, the swingers bend their knees at right after they have passed the center of the pendulum trajectory where the speed is the maximum to lower the center of gravity. The swingers stretch their knees at the two ends where the displacement is the maximum to raise the center of gravity. By repeating these motions in good timing, the swing is accelerated and the amplitude is increased.

When the timing is reversed, that is, when the swingers stretche their knees at right after they have passed the center of the pendulum trajectory and bend their knees at two ends, the swing is damped and the amplitude is reduced. The bending and stretching of knees moves the center of gravity and changes the moment of inertia (regarding the trajectory switching of free vibration of the pendulum 10, refer paragraph 0022 to 0032 in the first embodiment).

### (Effect)

In the damping scheme of the embodiment according to the present disclosure, the inertia term is changed by interlocking equation. In contrast, in the active damping scheme, the external force term is changed by the equation of motion, and the action thereof is different. When changing the external force term, force must be applied to the direction opposite the direction of motion in good timing to offset, and precise control is required. Furthermore, to suppress vibration in two or more directions, it is general to attach two or more actuator, and the mechanism becomes complicated.

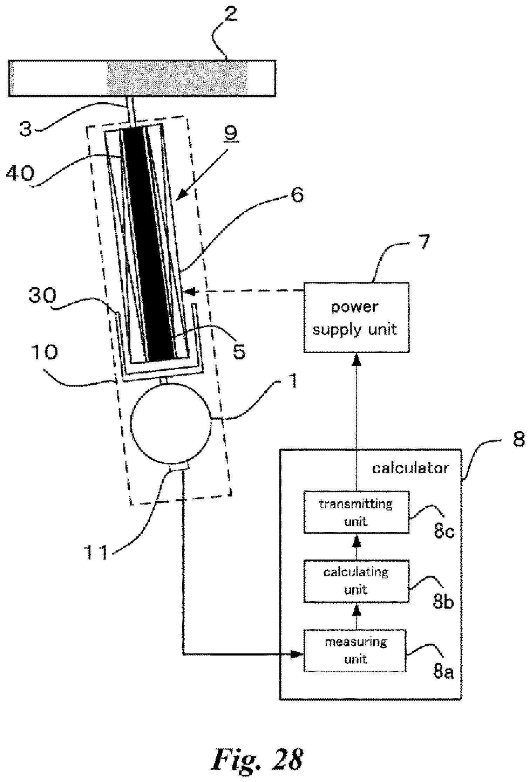

Accordingly, in the embodiment of the present disclosure, by transforming the magnetic fluid 5 in the radial direction, the inertia term is changed by one actuator. For example, in the embodiment in Figs. 27 and 28, the magnetic fluid 5, which is filled in the tub 30 and is forming the inner diameter of the tube 30, is filled inside the space surrounded by the inner wall 40 to transform into the cylindrical shape and becomes small in the radial direction. That is, in the embodiment of the present disclosure, the external force term of the equation of motion is not changed, but the inertia term is changed by the equation of motion. By changing the inertia term in this way, the advantage that vibration in various directions can be suppressed can be obtained.

In the fourth embodiment, the magnetic fluid 5 is filled in the damping device 9 attached to the damping target 1, and the electromagnet 6 is installed around the magnetic fluid 5. The power supply unit 7 is connected to the electromagnet 6, and the calculator 8 is connected to the power supply unit 7. The operation of the calculator 8 is the same as the first embodiment. In the fourth embodiment, the components to change the moment of inertia of the pendulum 10 are only the electromagnet 6 to transform the magnetic fluid 5 filled in the damping device 9, the tube 30, and the power supply unit 7 and the calculator 8 that are the control system thereof. Therefore, motors, etc., to drive a mass attached to the damping target 1 is unnecessary, and there is no concern for the failure of the driving unit. As a result the maintenance and adjustment of the motor can be omitted, the configuration can be simplified, and the reliability of when the suppression or increasing of vibration is performed can be improved.

Furthermore, in the fourth embodiment, since the driving unit such as motor is unnecessary, low maintenance cost can be anticipated. In addition, the conduction control of the electromagnet 6 may be a simple switching of on and off of the power supply unit 7. Therefore, the configuration of the calculator 8 to control the power supply unit 7 may also be simple, and no complicated control scheme is required. As a result, cost required for the power supply unit 7 and the calculator 8 is greatly reduced from the cost of the general active-type damping device, and it is extremely advantageous in economy.

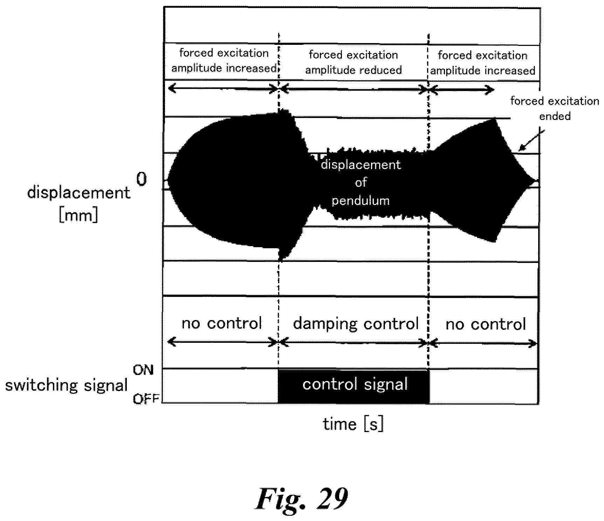

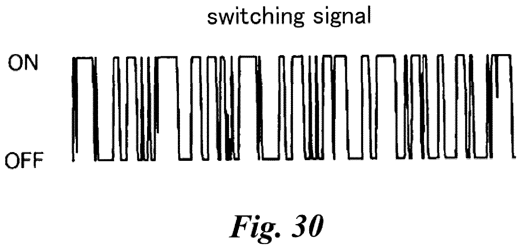

Fig. 29 illustrates an example result in which the test device in the fourth embodiment is produced and the performance thereof is evaluated. In the produced test device, the ceiling 2 of the device illustrated in Figs. 27 and 28 is movable, and forcibly excites the pendulum 10. Fig. 20 is a graph indicating the displacement response of the pendulum 10 and the waveform of the switching signal input from the power supply unit 7. When the forcible excitation of the ceiling is started, the displacement response of the pendulum 10 is increased. In the section in which the switching signal is input while the forcible excitation of the ceiling 2 and the damping control is performed, the displacement response of the pendulum 10 decrease and converged to a certain value. Fig. 30 illustrates an enlarged diagram of the switching signal in the section with damping control.

In the fourth embodiment, the calculator 8 input a command according to the switching timing indicated in the above Fig. 5, and then, the displacement response increases again in the section in which the damping control is canceled. After the forcible excitation of the pendulum 10 in the ceiling 2 is canceled, the displacement response of the pendulum 10 decreases, and the amplitude becomes zero. Accordingly, the displacement response of the pendulum 10 decreases in the damping control section, meaning that the damping device is operated effectively in the embodiment of the present disclosure.

### (Modified Example of Fourth Embodiment)

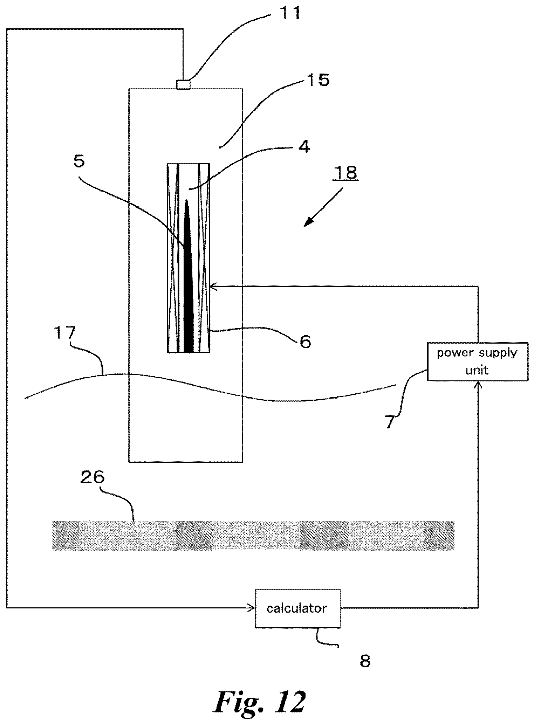

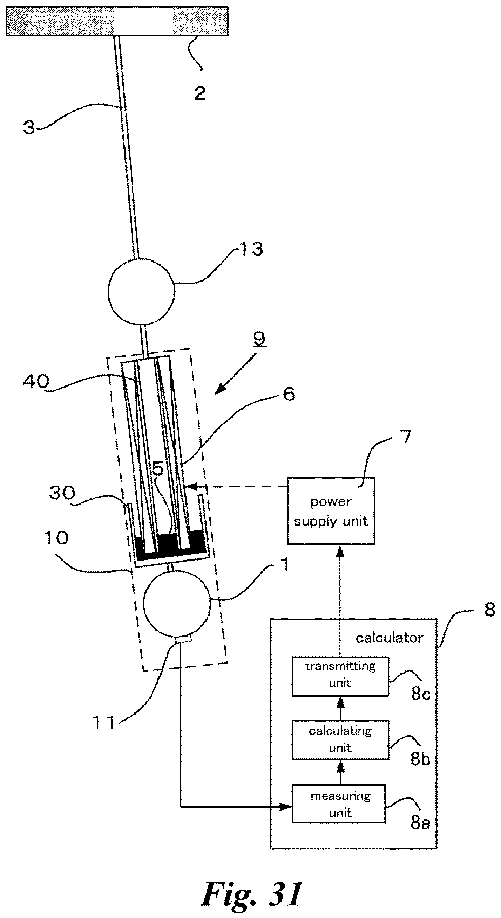

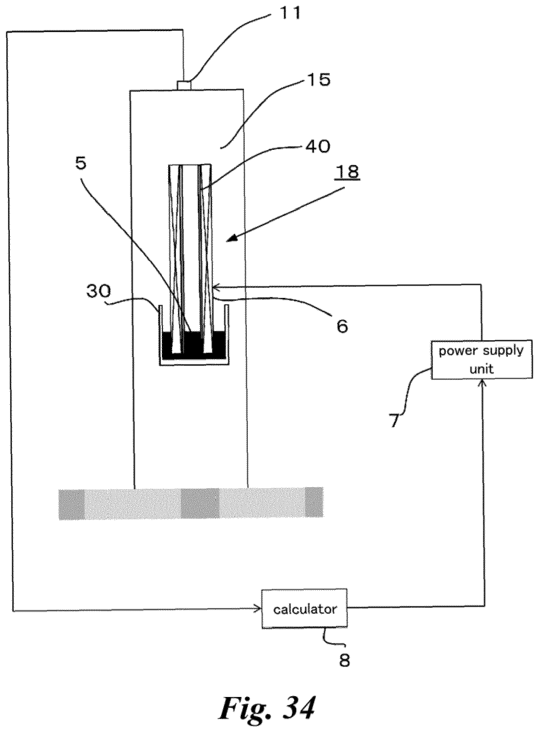

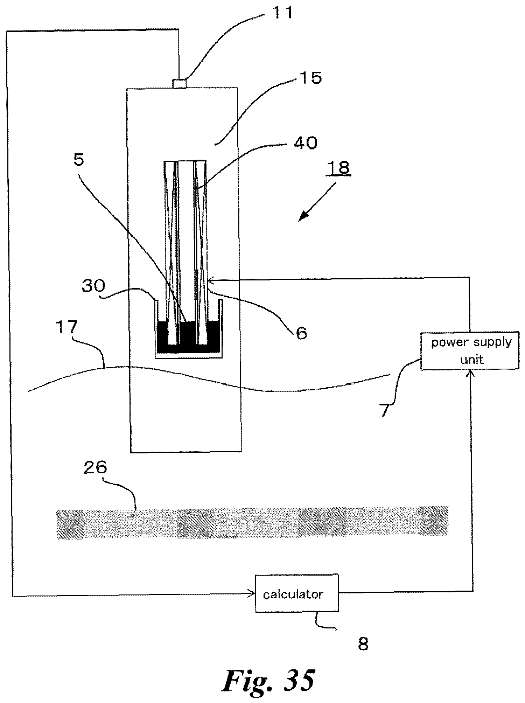

Embodiments illustrated in Figs. 31 to 35 are the modified examples of the above fourth embodiment. Each embodiment illustrated in Figs. 31 to 33 corresponds to respective embodiment that is the modified example of the above first embodiment (Figs. 7 to 9). An embodiment illustrated in Fig. 34 corresponds to the embodiment that is the modified example of the above second embodiment (Fig. 11) . An embodiment illustrated in Fig. 35 corresponds to the embodiment that is the modified example of the above third embodiment (Fig. 12). These modified examples also include the tub 30, and the portion where the damping target 1 including the tube 30 (in the first and second embodiments, the container 4) is the damping device 9.

### (Other Embodiment)

Although the plurality of the embodiments of the present disclosure is described, these embodiments are only provided as examples are not intended to limit the scope of claims. These embodiments may be implemented in various forms, and various omissions, replacements, and modifications can be made thereto without departing from an abstract of the invention. These embodiments and modifications thereof are included in the scope and abstract of the invention, as well as the invention described in the scope of claims and equivalent range thereto.

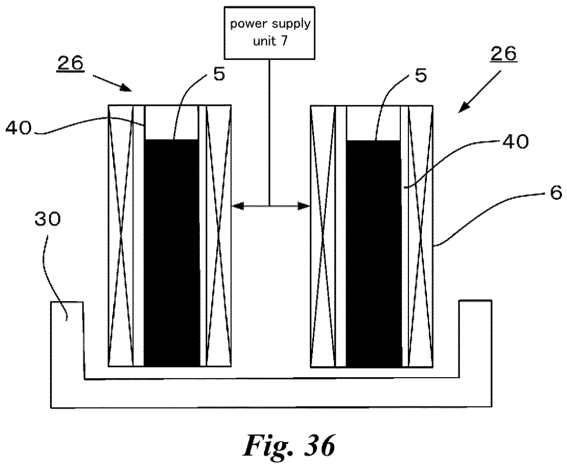

The installation position of the container or damping device of the damping target may be changed as appropriate. For example, an embodiment illustrated in Fig. 36 is two damping devices 26 and 26 that are devices illustrated in Fig. 20 arranged in the horizontal direction (right-left direction in figure). In the embodiment illustrated in Fig. 36, the height of the electromagnet 6 is made small so that the time for the magnetic fluid 5 to transform will be small. In this case, the device can be made compact by the small height of the electromagnet 6, however, the amount of change in inertia becomes small.

Therefore, in the embodiment illustrated in Fig. 36, two damping device 26 are provided to compensate the reduced amount of change in inertia. By this way, the damping control in high frequency is enabled. Accordingly, the number of damping device illustrated in Fig. 20 may be designed as appropriate depending on the objective, so that most preferable system can be constructed.

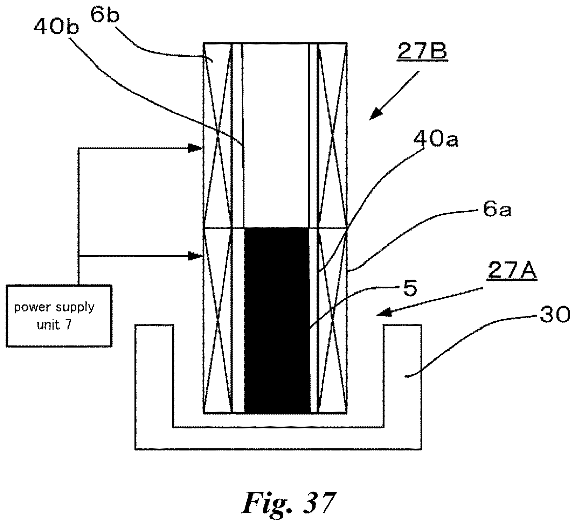

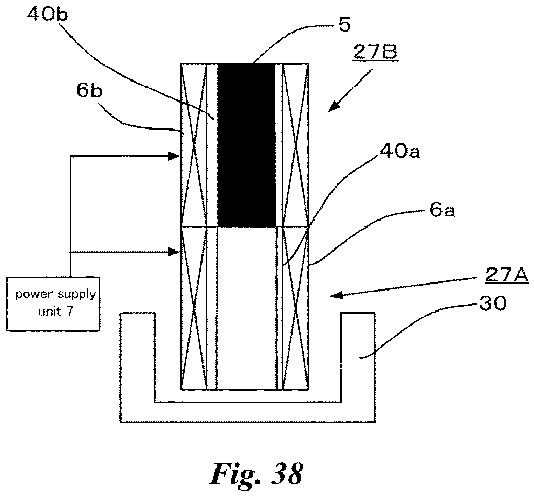

Embodiments illustrated in Figs. 37 and 38 is damping devices 27A and 27B in which two devices illustrated in Fig. 20 is stacked in the vertical direction. The lower damping device 27A includes an inner wall 40a and an electromagnet 6a, and the upper damping device 27B includes an inner wall 40b and an electromagnet 6b.

The inner diameters of the inner space of the damping devices 27A and 27B where the magnetic fluid 5 moves are the same. The radial direction of the inner spaces of the damping device 27A and 27B are perpendicular to the moving direction of the magnetic fluid 5. In these embodiments, by applying current to lower and upper electromagnets 6a and 6b in good timing, the magnetic fluid 5 transforms, and a condition in which the magnetic fluid 5 is in the lower damping device 27A (Fig. 37) and a condition in which the magnetic fluid 5 is in the upper damping device 27B (Fig. 38) can be rapidly repeated.

In the above described devices illustrated in Figs. 20 to 22, when the magnetic fluid 5 transforms, a flow (refer the white arrow in Fig. 21) such that the magnetic fluid 5 is sucked into the inside of the inner wall 40 from the lower portion of the inner wall 40 is produced. Here, since the magnetic fluid 5b flows into the inside of the inner wall 40 with small diameter from the tub 30 with the large diameter, viscous resistance relative to the magnetic fluid 5 becomes large. Therefore, the time for the magnetic fluid 5 to transform becomes long, and there is a possibility that frequency band range that can be damped is limited.

On the other hand, in the embodiment illustrated in Figs. 37 and 38, the inner diameters of the inner space of the damping devices 27A and 27B where the magnetic fluid 5 moves are the same. Therefore, the magnetic fluid 5 which moves vertically inside the inner walls 40a and 40b can flow smoothly, and the viscous resistance hardly is produced. Therefore, in the damping devices 27A and 27B, the time for the magnetic fluid 5 to transform becomes short, and the frequency band range that can be damped can be higher than the devices illustrated in Figs. 20 to 22.

In the embodiments illustrated in Figs. 37 and 38, the conductive state is switched off and the magnetic fluid 5 is stored in the tub 30 when there is no need for damping. For example, when earthquake occurs and damping is required, the electromagnet 6a is firstly conducted to move the magnetic fluid 5 to the inside of the lower damping device 27A from the tub 30. Then, the electromagnet 6b is conducted to reciprocally move the magnetic fluid 6 between the electromagnet 6a and the electromagnet 6b. By this way, excellent damping is enabled.

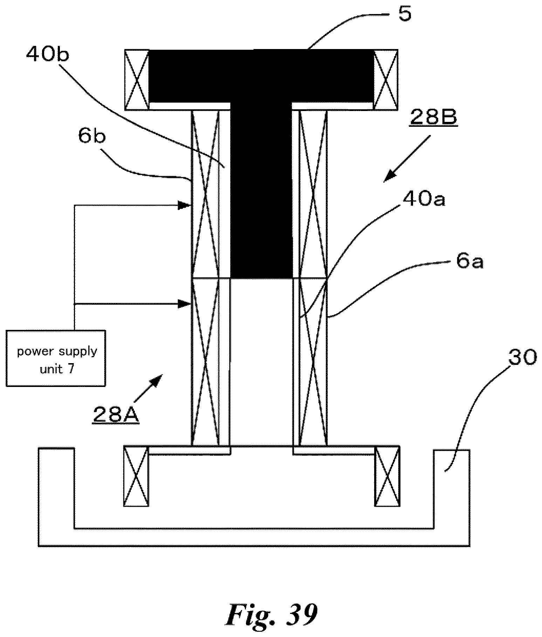

An embodiment illustrated in Fig. 39 includes damping devices 28A and 28B in which a part of the diameters of the damping devices 27A and 27B illustrated in Figs. 37 and 38 are made larger. The lower damping device 28A is configured to have larger diameter near the lower portion of the electromagnet 6a so that the cross-section of the electromagnet 6a is reverse T-shape. Furthermore, the upper damping device 28B is configured to have larger diameter near the upper portion of the electromagnet 6b so that the cross-section of the electromagnet 6b is T-shape. In two damping devices 28A and 28B stacked in the vertical direction, the inner diameter of the inner space at portion in contact with each other is the same.

Accordingly, by enlarging the end portion of the inner diameter of the damping devices 28A and 28B stacked in the vertical direction, the moving amount of the center of gravity of the magnetic fluid 5 can be large, and larger target can be damped. By combining the examples of devices illustrated in Fig. 36 to 39, and by applying the above described first to third embodiment, systems according to the objective can be designed.

### REFEREENCE SIGNS

- 1, 13:: damping target
- 2, 12:: ceiling
- 3, 14:: pendulum structure
- 4:: container
- 5:: magnetic fluid
- 6:: electromagnet
- 7:: power supply unit
- 8:: calculator
- 9, 18, 24, 25, 26, 27A, 27B, 28A, 28B:: damping device
- 10:: pendulum
- 11:: sensor
- 15:: structure
- 16:: floating structure
- 17:: sea surface
- 21:: suspended structure
- 22:: thyristor module
- 23:: shield
- 26:: seabed
- 30:: tub
- 40:: inner wall

## Claims

1. A damping device comprising:
a container attached to a damping target;
a magnetic fluid which is included in the container and which is freely transformable so as to move a center of gravity of the damping target;
an electromagnet to transform the magnetic fluid by an excited magnetic field;
a power supply unit to supply a current to the electromagnet;
a sensor to measure displacement and speed of the damping target; and
a controller to transmit a control signal to the power supply unit based on a measure value of the sensor.

2. The damping device according to claim 1, wherein the controller transmits an on-off signal to the power supply unit 7 when the trajectory of a vibration motion of the damping target intersect with a relation formula x = kv (x: displacement, v: speed, k: constant) at speed displacement coordinate.

3. The damping device according to claim 1 or 2, wherein:
the damping target is incorporated in a freely rotatable structure, and
the freely rotatable structure is attached to the container.

4. The damping device according to claim 3, wherein:
a thyristor module in a suspended-type HVDC (High Voltage Direct Current Transmission) apparatus is provided as the freely rotatable structure, and
the thyristor module is attached to the container.

5. The damping device according to claim 1 or 2, wherein:
the damping target is incorporated in a structure fixed to ground or wall, and
the structure is attached to the container.

6. The damping device according to claim 1 or 2, wherein:
the damping target is incorporated in a floating structure floating on sea surface or in the air, and
the floating structure is attached to the container.

7. The damping device according any one of claims 1 to 6, wherein:
the sensors are provided to each of a plurality of the damping targets, and
the controller transmits the on-off signal to the power supply unit based on results in which measured values of each sensors are combined.

8. The damping device according any one of claims 1 to 7, wherein the container is formed of a hollow cylindrical member extending in the vertical direction.

9. The damping device according any one of claims 1 to 8 attached to the damping target.

10. The damping device according any one of claims 1 to 9, wherein:
a tub to accumulate the magnetic fluid is provided, and
the damping device is offset to an upper side of the tub.

11. The damping device according to claim 10, wherein the tub has an inner diameter larger than an outer diameter of an inner wall of the container to which the electromagnet is wound around.

12. The damping device according any one of claims 1 to 11, wherein a plurality of the damping device is arranged in the horizontal direction.

13. The damping device according any one of claims 1 to 12, wherein a plurality of the damping device is arranged in the vertical direction.

14. The damping device according to claim 13, wherein the inner diameters of inner spaces of the damping devices adjacent in the vertical direction where the magnetic fluid moves is the same.
